# EUROPÄISCHE PATENTSCHRIFT

(11) **EP 3 003 948 B1**
(45) Veröffentlichungstag und Bekanntmachung des Hinweises auf die Patenterteilung: **31.01.2018**
(21) Anmeldenummer: 14726084.8
(22) Anmeldetag: 22.05.2014
(51) Int. Cl.: B66B 17/26, B66B 9/06

(54) **STEILFÖRDERANLAGE FÜR DEN TAGEBAU**
STEEP-BELT CONVEYING INSTALLATION FOR OPEN-CAST MINING
INSTALLATION DE CONVOYAGE INCLINÉ POUR EXPLOITATION À CIEL OUVERT

(30) Priorität: 07.06.2013 DE 102013105937
(43) Veröffentlichungstag der Anmeldung: 13.04.2016
(73) Patentinhaber: ThyssenKrupp Industrial Solutions AG, 45143 Essen (DE)
(72) Erfinder: BECKER, Hans-Jürgen, 66287 Quierschied (DE); WERRE, Klaus, 66386 St. Ingbert (DE)
(74) Vertreter: thyssenkrupp Intellectual Property GmbH
(86) Internationale Anmeldenummer: PCT/EP2014/001385
(87) Internationale Veröffentlichungsnummer: WO 2014/194988

(56) Entgegenhaltungen:
- GB-A- 1 537 936
- JP-U- S55 140 563

## Beschreibung

Die vorliegende Erfindung betrifft eine Steilförderanlage zur Anordnung an der Böschung eines Tagebau-Abbautrichters, mit der Rohstoffe von einer tief gelegenen Beladestation, insbesondere aus der Abbausohle des Tagebaus, auf eine hoch gelegene Entladestation, insbesondere auf den Erdboden, transportierbar sind, aufweisend eine an der Böschung angeordnete Trasse, auf der ein erster Förderkorb und ein zweiter Förderkorb zwischen der tief gelegenen Beladestation und der hoch gelegenen Entladestation verfahrbar ist und die zur Aufnahme der Rohstoffe ausgebildet sind, wobei die Förderkörbe eine Entleerklappe zum Entleeren der Rohstoffe aus den Förderkörben aufweisen, wofür die Entleerklappe zwischen einer Schließstellung und einer Öffnungsstellung beweglich an den Förderkörben angeordnet ist.

### STAND DER TECHNIK

Aus der DE 10 2012 100 765 A1 ist eine Steilförderanlage zur Anordnung an der Böschung eines Tagebau-Abbautrichters bekannt, mit der Rohstoffe von einer tief gelegenen Beladestation, beispielsweise aus der Abbausohle des Tagebautrichters, auf eine hoch gelegene Entladestation, die sich auf der Ebene des Erdbodens befinden kann, transportiert werden können.

Die Förderkörbe verfahren auf einer Trasse, die sich zwischen der Beladestation am unteren Ende der Steilförderanlage und der Entladestation am oberen Ende der Steilförderanlage mit geradem Verlauf durchgehend erstreckt. Zum Be- und Entladen werden die Förderkörbe nicht gekippt, und die Förderkörbe besitzen eine oberseitige Einfüllöffnung und eine bodenseitige Entleerklappe, und wird die Entleerklappe geöffnet, kann der Rohstoff aus dem Förderkorb entladen werden. Hierfür ist die Entleerklappe gelenkig am Förderkorb befestigt und kann zwischen einer Schließstellung und einer Öffnungsstellung bewegt werden.

Die Lademasse der Förderkörbe kann bis zu 300 Tonnen umfassen, und befindet sich die Entleerklappe im Bodenbereich der Förderkörbe, so wirkt die Lademasse des Rohstoffes zum großen Teil auf die Entleerklappe. Wird die Entleerklappe zum Öffnen entriegelt, so entsteht das Problem der schlagartigen Entleerung des Förderkorbes, und die Verriegelung muss gegen die Massekräfte, die auf die Entleerklappe wirken, bewegt werden. Dadurch entstehen konstruktive Nachteile und die Entleerklappe und die Förderkörbe selbst sind einem großen Verschleiß unterworfen.

Auf der Entladestation am oberen Ende der Steilförderanlage kann sich ein Brecher mit einem entsprechenden Materialeintritt befinden, und wird der Rohstoff schlagartig entladen, können Nachteile beim Betrieb des Brechers, jedoch auch Nachteile hinsichtlich einer möglichen Beschädigung eines Bunkers oberhalb des Brechers entstehen. Daher ist ein kontrolliertes Entladen der Förderkörbe wünschenswert.

### OFFENBARUNG DER ERFINDUNG

Aufgabe der Erfindung ist die Schaffung einer Steilförderanlage mit einer verbesserten Entladung der Förderkörbe in der Entladestation. Insbesondere ist es die Aufgabe, eine kontrollierte Bewegung der Entleerklappe zwischen der Schließstellung und der Öffnungsstellung zu schaffen, um ein schlagartiges Entleeren des Rohstoffes aus den Förderkörben zu vermeiden. Insbesondere ist es die Aufgabe der Erfindung, den Verschleiß einer Schließmechanik der Entleerklappe am Förderkorb zu minimieren.

Diese Aufgabe wird ausgehend von einer Steilförderanlage zur Anordnung an einer Böschung eines Tagebau-Abbautrichters gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Gemäß der Erfindung ist ein Schubwagen vorgesehen, der von einer Außenseite gegen die Entleerklappe des Förderkorbes fahrbar ist und durch den die Entleerklappe zwischen der Schließstellung und der Öffnungsstellung kontrolliert bewegbar ist.

Die Erfindung geht von dem Gedanken aus, die Entleerklappe von einem Schubwagen von der Außenseite der Entleerklappe zu führen, wobei der Schubwagen kontrolliert bewegt werden kann. Durch die kontrollierte Bewegung des Schubwagens wird eine kontrollierte Bewegung der Entleerklappe ermöglicht, insbesondere können durch den Schubwagen große Kräfte auf die Entleerklappe aufgebracht werden, und wenn der Förderkorb mit Rohstoffen gefüllt ist, und eine große Masse von der Innenseite gegen die Entleerklappe wirkt, kann die Entleerklappe trotz der Krafteinwirkung durch die Rohstoffe durch den Schubwagen kontrolliert von der Außenseite bewegt werden. Der Schubwagen kann insbesondere in der Entladestation gegen die Entleerklappe gefahren werden, und befindet sich der Förderkorb in der oberen Parkposition in der Entladestation, kann der Schubwagen durch eine von der Bewegung des Förderkorbes unabhängigen Bewegung gegen die Entleerklappe gefahren werden.

Ein Schubwagen im Sinne der vorliegenden Erfindung beschreibt dabei jeden längs- oder drehbeweglichen Körper, der geeignet ist, außenseitig gegen die Entleerklappe zu verfahren und eine Halte- und Führungskraft auf diese auszuüben. Dabei kann der Schubwagen rollen, gleiten oder auf sonstige Weise verfahren werden und kann eine würfelartige, längliche, stangenartige oder sogar runde Form aufweisen, die beispielsweise nach Art eines Exzenters gegen die Außenseite der Entleerklappe mit einer Exzenterfläche verdrehbar ist.

Mit besonderem Vorteil können Führungsmittel vorgesehen sein, in denen der Schubwagen zum Anfahren gegen die Entleerklappe verfahrbar ist. Die Führungsmittel können eine Führungseinrichtung zur Führung der Schubwagenbewegung aufweisen, die mit der Erstreckungsrichtung der Entleerklappe einen Winkel kleiner 45°, vorzugsweise kleiner 30°, bevorzugt kleiner 20° und am meisten bevorzugt kleiner 10° einschließt. Dabei können die Führungsmittel beispielsweise in der Trasse angeordnet sein, sodass der Schubwagen an der Trasse verfahrbar aufgenommen ist. Auf gleiche Weise kann der Schubwagen an einem Tragwerk zur Aufnahme der Trasse an der Böschung angeordnet sein, wobei das Tragwerk beispielsweise die Grundstruktur der Steilförderanlage bildet.

Durch das Anfahren des Schubwagens gegen die Erstreckungsrichtung der Entleerklappe können bei gegebenen Verfahrkräften des Schubwagens große Kontaktkräfte durch den Schubwagen gegen die Entleerklappe erzeugt werden. Je kleiner der Winkel zwischen der Erstreckungsrichtung der Entleerklappe und der Führungsrichtung des Schubwagens ist, umso größere Kontaktkräfte können bei gegebenen Verfahrkräften des Schubwagens gegen die Entleerklappe gebildet werden.

Beispielsweise können am Schubwagen Führungsrollen angeordnet sein, die in den Führungsmitteln abrollen können. Die Führungsmittel können beispielsweise kulissenartige Aussparungen in der Trasse oder im Tragwerk der Steilförderanlage bilden, und die Erstreckungsrichtung der kulissenartigen Führungsmittel bestimmt dabei die Bewegungsrichtung des Schubwagens. Um die Bewegung in den Schubwagen einzuleiten, können Bewegungsaktuatoren vorgesehen sein, beispielsweise können für jeden Schubwagen zwei Bewegungsaktuatoren zwischen der Trasse beziehungsweise dem Tragwerk und dem Schubwagen angeordnet sein. Die Bewegungsaktuatoren können beispielsweise aus Hubzylindern oder aus Spindel-Mutter-Systemen gebildet sein. Insbesondere kann die Trasse zwei Schienenpaare aufweisen, wobei sich der Schubwagen zwischen den Schienen der Schienenpaare befindet und verfährt, und für jeden der beiden Förderkörbe, die auf separaten Schienenpaaren verfahren, kann ein jeweiliger Schubwagen vorgesehen sein.

Gemäß einer besonderen Weiterbildung des erfindungsgemäßen Schubwagens kann dieser über einen Kontaktpunkt mit der Entleerklappe hinaus gegen diese verfahren werden. Dabei können die Förderkörbe einen Klappenriegel aufweisen, durch den die Entleerklappe in der Schließstellung verriegelbar ist, und fährt der Schubwagen über den Kontaktpunkt mit der Entleerklappe hinaus, so kann entgegen der Last der Rohstoffladung, die innenseitig gegen die Entleerklappe wirkt, der Klappenriegel entlastet werden. Ist der Schubwagen über den Kontaktpunkt mit der Entleerklappe hinaus verfahren worden, so nimmt der Schubwagen die Last der Rohstoffe im Wesentlichen vollständig auf, die innenseitig gegen die Entleerklappe wirkt. Ist der Klappenriegel entriegelt worden, so kann der Schubwagen langsam zurückgefahren werden, wobei die Entleerklappe bei Zurückfahren des Schubwagens kontrolliert geöffnet werden kann.

Mit weiterem Vorteil kann der Schubwagen wenigstens eine Kontaktrolle aufweisen, mit der dieser gegen die Entleerklappe verfahrbar ist. Die Entleerklappe kann hierfür mindestens eine Rollbahn aufweisen, gegen die die Kontaktrolle fahrbar und auf der die Kontaktrolle abrollbar ist.

Die Aufgabe der vorliegenden Erfindung wird ferner gelöst durch ein Verfahren zur Betätigung einer Entleerklappe an den Förderkörben einer Steilförderanlage, um die Entleerklappe zwischen einer Schließstellung und einer Öffnungsstellung zu bewegen, wobei die Steilförderanlage zur Anordnung an der Böschung eines Tagebau-Abbautrichters ausgebildet ist und wobei mit den Förderkörben Rohstoffe von einer tief gelegenen Beladestation, insbesondere aus der Abbausohle des Tagebaus, auf eine hoch gelegene Entladestation, insbesondere auf den Erdboden, transportiert werden. Dabei sieht das Verfahren mehrere Schritte vor, die wenigstens das Bewegen des Förderkorbes in die hoch gelegene Entladestation, das Anfahren eines Schubwagens gegen die Entleerklappe, das Entriegeln der Entleerklappe durch einen Klappenriegel und das Bewegen der Entleerklappe durch ein kontrolliertes Verfahren des Schubwagens unter Beibehaltung des Kontaktes zwischen der Entleerklappe und dem Schubwagen umfassen.

Das Verfahren kann insbesondere einen Zwischenschritt zwischen dem Anfahren des Schubwagens gegen die Entleerklappe und dem Entriegeln der Entleerklappe durch einen Klappenriegel umfassen. Der Zwischenschritt kann darin bestehen, dass der Schubwagen über einen Kontaktpunkt mit der Entleerklappe hinaus gegen diese verfahren wird, sodass der die Entleerklappe verschließende Klappenriegel wenigstens teilweise kraftentlastet wird. Dabei kann jedoch die Bewegung des Schubwagens, mit der dieser gegen die Entleerklappe angefahren wird, gleichförmig und ununterbrochen in die Bewegung übergehen, mit der der Schubwagen über den Kontaktpunkt mit der Entleerklappe hinaus fährt, beispielsweise in der vorstehend beschriebenen Führungskulisse der Führungsmittel.

Das Verfahren kann ferner vorsehen, dass der Schubwagen mittels zumindest einem Bewegungsaktuator verfahren wird, wobei der Bewegungsaktuator im Wesentlichen über seinem gesamten Verfahrweg Kontaktkräfte zur Steuerung der Bewegung der Entleerklappe aufnimmt. Beispielsweise kann der Schubwagen auch während der Öffnungsbewegung der Entleerklappe stoppen, wodurch gleichzeitig ein Stoppen der Öffnungsbewegung der Entleerklappe erzeugt wird. Beispielsweise kann auch vorgesehen sein, dass der Schubwagen erst dann aktiviert wird, insbesondere mit den Bewegungsaktuatoren, wenn das Aufnahmebehältnis, in das die Rohstoffe aus den Förderkörben entleert wird, zur Aufnahme der Rohstoffe bereit ist. Beispielsweise kann die Steilförderanlage einen Brecher im Bereich der Entladestation umfassen, in den die Rohstoffe aus den Förderkörben durch die Entleerklappe entladen werden. Ist der Bunker des Brechers noch zu stark gefüllt, so kann der Förderkorb bereits in die obere Parkposition in der Entladestation gefahren werden, ohne dass die Entleerklappe geöffnet wird, solange der Schubwagen durch die Bewegungsaktuatoren noch nicht aktiviert wurde. Erst wenn der Brecher beziehungsweise der Bunker oder eine sonstige Weiterführungsstation der Rohstoffe zur Aufnahme weiterer Rohstoffe aus den Förderkörben bereit ist, kann der Schubwagen durch Aktivierung der Bewegungsaktuatoren gegen die Entleerklappe gefahren und die Entleerklappe mit dem Schubwagen geöffnet werden. Dadurch entsteht der Vorteil, dass der Entladevorgang zeitlich vom Erreichen der oberen Entladeposition entkoppelt wird. Somit kann auch bei noch nicht gewünschtem Entladen die Entladeposition bereits angefahren werden und gleichzeitig die Beladung in der Beladeposition erfolgen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel einer Steilförderanlage, die in Anordnung einer Böschung eines Tagebau-Abbautrichters gezeigt ist,
- Figur 2: eine perspektivische Detailansicht des Schubwagens im Bereich der Entladestation, wobei die Entleerklappe eines Förderkorbes geschlossen ist,
- Figur 3: die Detailansicht des Schubwagens in der Entladestation, während die Entleerklappe eine Öffnungsbewegung ausführt,
- Figur 4: eine schematisierte Ansicht eines Förderkorbes auf einer Trasse mit einem Schubwagen, der gegen die Entleerklappe des Förderkorbes gefahren ist,
- Figur 5: die Ansicht des Förderkorbes auf der Trasse mit dem Schubwagen, der über einen Kontaktpunkt mit der Entleerklappe hinaus gegen diese verfahren ist,
- Figur 6: die schematische Ansicht des Förderkorbes auf der Trasse mit einem Klappenriegel, der die Entleerklappe entriegelt hat und
- Figur 7: die Ansicht des Förderkorbes auf der Trasse mit einer Entleerklappe, die durch einen zurückgefahrenen Schubwagen geöffnet ist, sodass Rohstoffe aus dem Förderkorb entladen werden können.

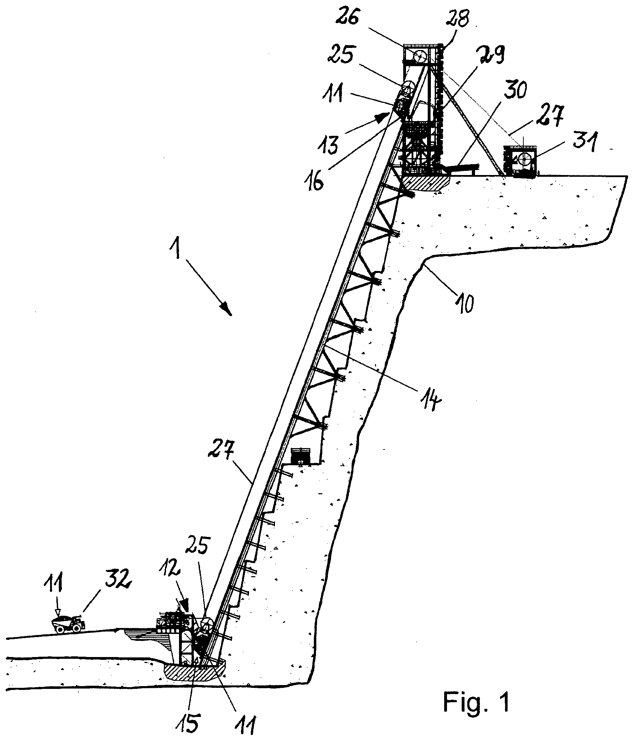

Figur 1 zeigt ein Ausführungsbeispiel einer Steilförderanlage 1, die an der Böschung 10 eines Tagebau-Abbautrichters angeordnet ist und die Böschung 10 erstreckt sich von einem unteren Höhenniveau bis zu einem oberen Höhenniveau, das beispielsweise den Erdboden bildet. Im Bereich des unteren Höhenniveaus weist die Steilförderanlage 1 eine Beladestation 12 auf, und im Bereich des Erdbodens auf dem oben gelegenen Höhenniveau weist die Steilförderanlage 1 eine Entladestation 13 auf. Die Rohstoffe 11, die beispielsweise durch Fahrzeuge 32 an die tief gelegene Beladestation 12 gefahren werden können, können über die Höhendistanz zwischen der Beladestation 12 und der Entladestation 13 befördert werden.

Hierzu weist die Steilförderanlage 1 eine Trasse 14 auf, die sich vom unteren Höhenniveau bis über das obere Höhenniveau hinweg erstreckt und zwischen der Beladestation 12 und der Entladestation 13 verläuft. Die Trasse 14 ist an der schrägen Böschung 10 befestigt, und zur Verlängerung der Trasse 14 über das obere Höhenniveau hinaus dient ein Tragwerk 28, an dem die Trasse 14 durchgehend verlaufend befestigt ist.

Die Steilförderanlage 1 weist einen ersten Förderkorb 15 und einen zweiten Förderkorb 16 auf. Der Begriff des Förderkorbes 15, 16 umfasst dabei im Rahmen der vorliegenden Erfindung jede Form von Behältnissen, die geeignet sind, die Rohstoffe 11 aufzunehmen und die Behältnisse können aus Stahlplatten, aus einem Verbundstoff, beispielsweise Stahlbeton, aus einer Stahl-Schweißkonstruktion oder dergleichen ausgebildet sein und sind in ihrer Konstruktion nicht auf einen korbartigen Körper im engeren Sinne beschränkt.

Der erste Förderkorb 15 ist beispielhaft in einer Parkposition in der Beladestation 12 und der zweite Förderkorb 16 ist beispielhaft in einer Parkposition in der Entladestation 13 gezeigt. Die Förderkörbe 15 und 16 sind über ein Zugmittel 27 miteinander verbunden, das über obere Umlenkrollen 26 und untere Umlenkrollen 25 geführt ist. Zum Antrieb der Förderkörbe 15 und 16 dient eine Antriebseinheit 31, wobei die Förderkörbe 15 und 16 im Pendelbetrieb zwischen der unteren Beladestation 12 und der oberen Entladestation 13 hin- und hergefahren werden können. Dadurch hebt sich das Eigengewicht der Förderkörbe 15 und 16 auf, sodass dieses nicht durch die Antriebseinheit 31 befördert werden muss. Die Antriebseinheit 31 ist beabstandet zum oberen Tragwerk 28 der Steilförderanlage 1 aufstehend auf dem Erdboden dargestellt.

Wird beispielsweise der erste Förderkorb 15 mit Rohstoff 11 beladen, kann der oben gelegene zweite Förderkorb 16 in einen Brecher 29 entladen werden, der in baulicher Einheit mit der Steilförderanlage 1 im Tragwerk 28 eingebracht ist. Der Brecher 29 kann zur Zerkleinerung des Rohstoffes 11 dienen, der anschließend über ein Abförderband 30 einer weiteren Verwendung zugeführt wird.

Ist der in der Beladestation 12 dargestellte erste Förderkorb 15 beladen worden, und ist der zweite Förderkorb 16 in der Entladestation 13 in den Brecher 29 entladen worden, so kann die Antriebseinheit 31 in Betrieb gesetzt werden, und der erste Förderkorb 15 fährt über die Trasse 14 beladen nach oben zur Entladestation 13, während der zweite Förderkorb 16 von der Entladestation 13 entleert nach unten zur Beladestation 12 verfährt. Anschließend kann sich der Be- und Entladeprozess der Förderkörbe 15 und 16 wiederholen. Folglich arbeitet die Steilförderanlage 1 periodisch im Pendelbetrieb der beiden Förderkörbe 15 und 16.

Zwischen den unteren und oberen Umlenkrollen 25 und 26 können in nicht näher gezeigter Weise Flaschenzüge gebildet sein, indem das Zugmittel 27 zwischen den Umlenkrollen 25 und 26 mehrfach geführt ist. Das Tragwerk 28 kann aus einer Stahlbaukonstruktion bestehen, und die Trasse 14 kann beispielsweise aus zwei beziehungsweise für beide Förderkörbe 15 und 16 aus vier Tragschienen ausgebildet sein.

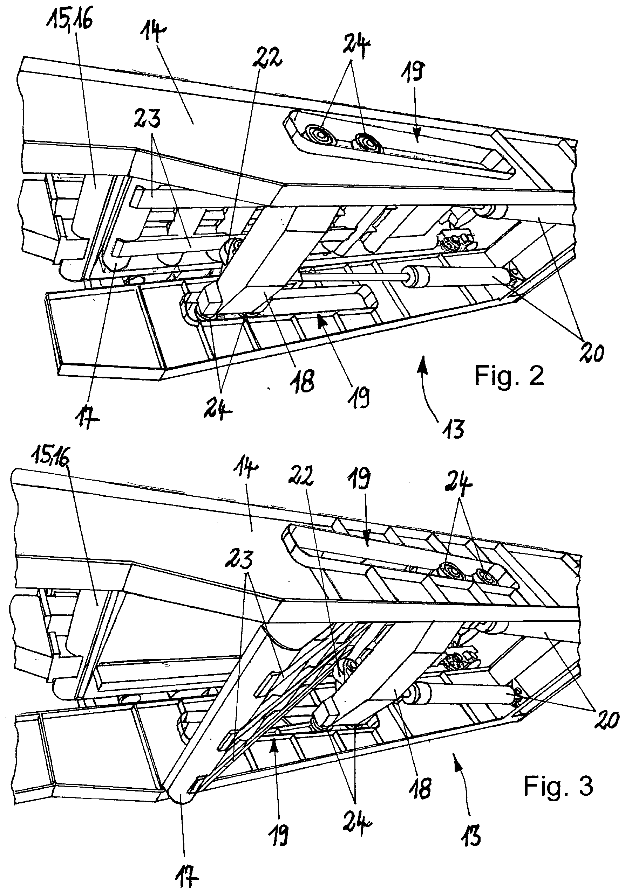

Die Figuren 2 und 3 zeigen jeweils eine Detailansicht der Steilförderanlage im Bereich der Entladestation 13, und es ist ein Förderkorb 15, 16 von der Unterseite in einer teilweisen Ansicht gezeigt, wobei sich auf der Unterseite des Förderkorbes 15, 16 die Entleerklappe 17 befindet, die in Figur 2 geschlossen und in Figur 3 teilgeöffnet dargestellt ist. Der Förderkorb 15, 16 kann in nicht näher gezeigter Weise auf einer Trasse 14 verfahren, die beispielhaft aus zwei parallel verlaufenden Schienenkörpern gebildet ist.

Auf der Höhe, auf der der Förderkorb 15, 16 in der Entladestation 13 seine Parkposition einnimmt, befindet sich ein Schubwagen 18, der in einem Führungsmittel 19 verfahren werden kann. Der Schubwagen 18 weist hierfür Führungsrollen 24 auf, die in dem kulissenartigen Führungsmittel 19 abrollen können. Das Führungsmittel 19 ist dabei beispielhaft in die Schienenkörper der Trasse 14 eingebracht.

Die Entleerklappe 17 ist gelenkig an der Bodenseite des Förderkorbes 15, 16 angeordnet, und wird die Entleerklappe geöffnet, wie beispielsweise in Figur 3 gezeigt, so können Rohstoffe, die im Förderkorb 15, 16 eingefüllt sind, aus diesen entleert werden.

In Figur 2 ist der Schubwagen 18 in einer Position gezeigt, in der sich Kontaktrollen 22, die am Schubwagen 18 angebracht sind, in Kontakt mit der Entleerklappe 17 befinden. Zum Kontakt der Kontaktrollen 22 gegen die Entleerklappe 17 weist die Entleerklappe 17 Rollbahnen 23 auf, auf denen die Kontaktrollen 22 des Schubwagens 18 abrollen können. Zur Bewegung des Schubwagens 18 sind Bewegungsaktuatoren 20 in Form von Hubzylindern gezeigt, sodass durch ein Ein- und Ausfahren der Bewegungsaktuatoren 20 der Schubwagen 18 zwischen einer vorderen und einer hinteren Endposition verfahren kann, wobei der Schubwagen 18 etwa in der vorderen Endposition gezeigt ist.

In der gezeigten vorderen Position gelangen die Kontaktrollen 22 gerade gegen die Rollbahnen 23 an der Entleerklappe 17. Wird der Schubwagen 18 durch ein weiteres Ausfahren der Bewegungsaktuatoren 20 in Richtung einer vorderen Endposition im Führungsmittel 19 weiter bewegt, so kann die Last, die von der Innenseite gegen die Entleerklappe 17 wirkt, vom Schubwagen 18 aufgenommen werden. In der entlasteten Anordnung der Verriegelung der Entleerklappe 17 kann diese gelöst werden, sodass bei einem Zurückfahren des Schubwagens 18, wie in Figur 3 gezeigt, die Entleerklappe 17 kontrolliert geöffnet werden kann.

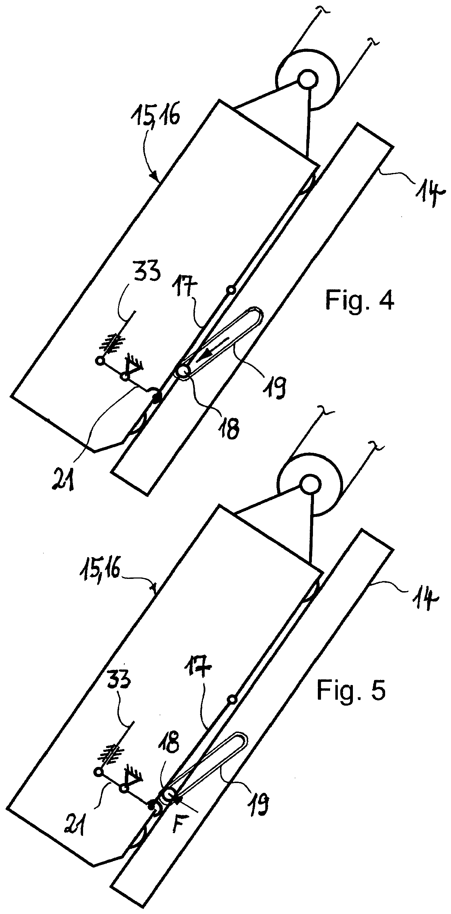

Figur 3 zeigt den Schubwagen 18 in Kontakt mit der Entleerklappe 17 in einer hinteren Position, in der die Bewegungsaktuatoren 20 im Wesentlichen eingefahren sind. Dabei sind die Kontaktrollen 22 an den Rollbahnen 23 abgerollt, und durch das Zurückfahren des Schubwagens 18 mit den Führungsrollen 24 im Führungsmittel 19 kann die Entleerklappe 17 kontrolliert geöffnet werden, d.h. die Öffnungsbewegung kann beispielsweise auch gestoppt werden. Der Rohstoff kann dabei aus dem Förderkorb 15, 16 zwischen den Führungsschienen der Trasse 14 hindurchfallen und beispielsweise in den Bunker eines Brechers im Bereich der Entladestation 13 der Steilförderanlage 1 gelangen. Die Entlastung der Verriegelungsmechanik der Entleerklappe 17 und die anschließende Öffnung der Entleerklappe 17 ist in den folgenden Figuren 4 bis 7 in einer Abfolge gezeigt. Auf gleiche Weise kann der Rohstoff 11 auch in einen Förderkorb einer sich anschließenden weiteren Steilförderanlage entladen werden, wenn mehrere Steilförderanlagen 1 kaskadenartig an der Böschung eines Tagebautrichters angeordnet sind.

Die Figuren 4 bis 7 zeigen einen Förderkorb 15, 16 auf einer Trasse 14 in einem Bereich, in dem der Förderkorb 15, 16 einen schematisch dargestellten Schubwagen 18 überfährt, beispielsweise in der hoch gelegenen Entladestation 13 der Steilförderanlage 1.

Der Schubwagen 18 ist in einem Führungsmittel 19 geführt, das eine Erstreckungsrichtung aufweist, die zur Erstreckungsrichtung der Entleerklappe 17 einen Winkel einschließt. Durch das Verfahren des Schubwagens 18 im Führungsmittel 19 kann der Schubwagen 18 außenseitig gegen die Entleerklappe 17 anfahren. Die Entleerklappe 17 ist durch einen schwenkbeweglich am Förderkorb 15, 16 gelagerten Klappenriegel 21 verschließbar, wobei der Klappenriegel 21 mit einem Riegelstellglied 33 gekoppelt ist. Wird das Riegelstellglied 33 längs bewegt, so verschwenkt der Klappenriegel 21 derart, dass die Entleerklappe 17 freigegeben werden kann. Öffnet die Klappe 17, kann der Rohstoff 11 aus dem Öffnungsbereich des Förderkorbes 15, 16 entleert werden. Im Folgenden wird das Verfahren zur Betätigung der Entleerklappe 17 am Förderkorb 15, 16 mittels des Schubwagens 18 beschrieben.

In Figur 4 befindet sich der Schubwagen 18 zunächst nur in Kontakt gegen die Entleerklappe 17, und der Schubwagen 18 ist in den vorderen Bereich des Führungsmittels 19 verfahren worden. Dabei lastet die Entleerklappe 17 noch in der gezeigten Klaue des Klappenriegels 21, da in der Kontaktposition des Schubwagens 18 gegen die Entleerklappe 17 noch keine Kraft durch den Schubwagen 18 aufgenommen werden kann.

Figur 5 zeigt den Schubwagen 18 in Kontakt mit der Entleerklappe 17, wobei der Schubwagen 18 um einen geringen Weg über einen Kontaktpunkt hinaus gegen die Entleerklappe 17 verfahren wurde, sodass eine Kontaktkraft F vom Schubwagen 18 gegen die Entleerklappe 17 erzeugt wird. Dadurch löst sich der vordere Bereich der Entleerklappe 17 aus der Klaue des Klappenriegels 21, sodass der Klappenriegel 21 zumindest teilweise kraftentlastet ist.

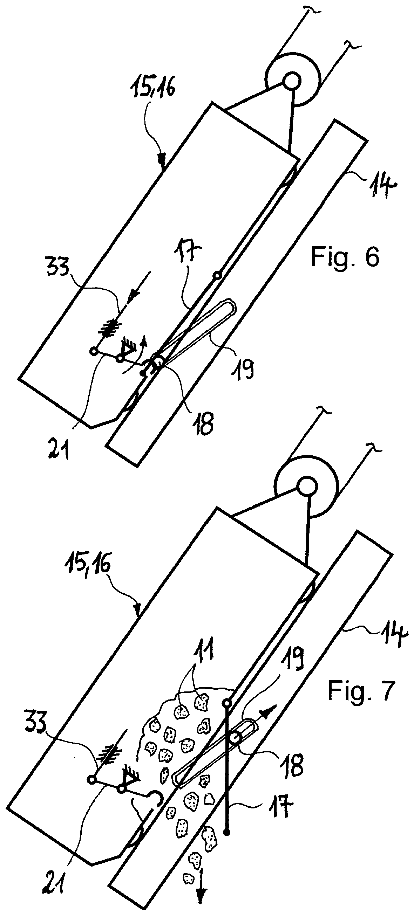

Figur 6 zeigt die Anordnung des Schubwagens 18 gemäß der Anordnung in Figur 5, in der der Schubwagen 18 über den Kontaktpunkt mit der Entleerklappe 17 hinaus gegen diese verfahren wurde. Anschließend wurde das Riegelstellglied 33 aktiviert, sodass der Klappenriegel 21 derartig in gezeigter Pfeilrichtung verschwenkt ist, dass die Klaue des Klappenriegels 21 außer Eingriff mit der Entleerklappe 17 gelangt ist. Die Gewichtskraft des Rohstoffes 11, die gegen die Entleerklappe 17 von der Innenseite des Förderkorbes 15, 16 wirkt, lastet in der gezeigten Anordnung gemäß Figur 6 auf dem Schubwagen 18.

Figur 7 zeigt einen Übergang des Schubwagens 18 von der Schließposition der Entleerklappe 17 in eine Position, in der die Entleerklappe 17 in eine Öffnungsposition gefahren wird. Das Öffnen der Entleerklappe 17 wird erreicht, indem der Schubwagen 18 im Führungsmittel 19 zurückfährt, wobei das Zurückfahren derart kontrolliert erfolgen kann, dass das Entleeren des Rohstoffes 11 aus dem Förderkorb 15, 16 langsam und kontrolliert erfolgen kann. Ist der Förderkorb 15, 16 vollständig entleert, kann der Schubwagen 18 wieder in die in Figur 6 gezeigte Position zurückfahren, und das Riegelstellglied 33 kann ebenfalls wieder entgegen der in Figur 6 gezeigten Pfeilrichtung zurückbewegt werden, und sodass auch der Klappenriegel 21 wieder entgegen der gezeigten Pfeilrichtung zurück verschwenken kann, um wieder in Eingriff mit der Entleerklappe 17 zu gelangen. Anschließend kann der Schubwagen 18 wieder in die in Figur 7 gezeigte zurückgefahrene Position innerhalb des Führungsmittel 19 verfahren werden, und der Förderkorb 15, 16 kann die Entladestation 13 entleert verlassen, während die Entleerklappe 17 wieder durch den Klappenriegel 21 in der Schließposition gehalten wird.

Die Kraftentlastung des Klappenriegels 21, wie diese durch die Kontaktkraft F des Schubwagens 18 auf die Entleerklappe 17 erzeugt wird, kann wenigstens teilweise erfolgen, soweit, dass wenigstens das Riegelstellglied 33 ohne erhöhten Verschleiß den Klappenriegel 21 außer Eingriff mit der Entleerklappe 17 bringen kann. Beispielsweise kann das Riegelstellglied 33 bereits den Klappenriegel 21 vorspannen, und erst anschließend kann der Schubwagen 18 über den Kontaktpunkt mit der Entleerklappe 17 hinaus verfahren werden, sodass bei Erreichen einer Mindestkontaktkraft F das Riegelstellglied 33 den Klappenriegel 21 öffnet und außer Eingriff mit der Entleerklappe 17 bringt. Anschließend kann der Schubwagen 18 derart kontrolliert zurückgefahren werden, dass der Rohstoff 11 kontrolliert aus dem Förderkorb 15, 16 entleert werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 1: Steilförderanlage
- 10: Böschung
- 11: Rohstoff
- 12: Beladestation
- 13: Entladestation
- 14: Trasse
- 15: erster Förderkorb
- 16: zweiter Förderkorb
- 17: Entleerklappe
- 18: Schubwagen
- 19: Führungsmittel
- 20: Bewegungsaktuator
- 21: Klappenriegel
- 22: Kontaktrolle
- 23: Rollbahn
- 24: Führungsrolle
- 25: untere Umlenkrolle
- 26: obere Umlenkrolle
- 27: Zugmittel
- 28: Tragwerk
- 29: Brecher
- 30: Abförderband
- 31: Antriebseinheit
- 32: Fahrzeug
- 33: Riegelstellglied

- F: Kontaktkraft

## Patentansprüche

1. Steilförderanlage (1) zur Anordnung an einer Böschung (10) eines Tagebau-Abbautrichters, mit der Rohstoffe (11) von einer tief gelegenen Beladestation (12), insbesondere aus der Abbausohle des Tagebaus, auf eine hoch gelegene Entladestation (13), insbesondere auf den Erdboden, transportierbar sind, aufweisend eine an der Böschung (10) angeordnete Trasse (14), auf der ein erster Förderkorb (15) und ein zweiter Förderkorb (16) zwischen der tief gelegenen Beladestation (12) und der hoch gelegenen Entladestation (13) verfahrbar sind und die zur Aufnahme der Rohstoffe (11) ausgebildet sind, wobei die Förderkörbe (15, 16) eine Entleerklappe (17) zum Entleeren der Rohstoffe (11) aus den Förderkörben (15, 16) aufweisen, wofür die Entleerklappe (17) zwischen einer Schließstellung und einer Öffnungsstellung beweglich an den Förderkörben (15, 16) angeordnet ist, **dadurch gekennzeichnet, dass** ein Schubwagen (18) vorgesehen ist, der von einer Außenseite gegen die Entleerklappe (17) fahrbar ist und durch den die Entleerklappe (17) zwischen der Schließstellung und der Öffnungsstellung kontrolliert bewegbar ist.

2. Steilförderanlage (1) nach Anspruch 1, **dadurch gekennzeichnet, dass** Führungsmittel (19) vorgesehen sind, in denen der Schubwagen (18) zum Anfahren gegen die Entleerklappe (17) verfahrbar ist.

3. Steilförderanlage (1) nach Anspruch 2, **dadurch gekennzeichnet, dass** die Führungsmittel (19) eine Führungsrichtung zur Führung der Schubwagenbewegung aufweisen, die mit der Erstreckungsrichtung der Entleerklappe (17) einen Winkel kleiner 45°, vorzugsweise kleiner 30°, besonders bevorzugt kleiner 20° und am meisten bevorzugt kleiner 10° einschließt.

4. Steilförderanlage (1) nach Anspruch 2 oder 3, **dadurch gekennzeichnet, dass** die Führungsmittel (19) in der Trasse (14) angeordnet sind, sodass der Schubwagen (18) an der Trasse (14) verfahrbar aufgenommen ist.

5. Steilförderanlage (1) nach einem der vorgenannten Ansprüche, **dadurch gekennzeichnet, dass** wenigstens ein Bewegungsaktuator (20) vorgesehen ist, durch den eine Schubbewegung in den Schubwagen (18) einleitbar ist.

6. Steilförderanlage (1) nach einem der vorgenannten Ansprüche, **dadurch gekennzeichnet, dass** der Schubwagen (18) über einen Kontaktpunkt mit der Entleerklappe (17) hinaus gegen diese verfahrbar ist.

7. Steilförderanlage (1) nach Anspruch 6, **dadurch gekennzeichnet, dass** die Förderkörbe (15, 16) einen Klappenriegel (21) aufweisen, durch den die Entleerklappe (17) in der Schließstellung verriegelbar ist, wobei bei einem Anfahren des Schubwagens (18) gegen die Entleerklappe (17) über den Kontaktpunkt hinaus der Klappenriegel (21) kraftentlastet wird.

8. Steilförderanlage (1) nach einem der vorgenannten Ansprüche, **dadurch gekennzeichnet, dass** der Schubwagen (18) wenigstens eine Kontaktrolle (22) aufweist, mit der dieser gegen die Entleerklappe (17) verfahrbar ist, insbesondere wobei die Entleerklappe (17) zumindest eine Rollbahn (23) aufweist, gegen die die Kontaktrolle (22) fahrbar und auf der die Kontaktrolle (22) abrollbar ist.

9. Steilförderanlage (1) nach einem der vorgenannten Ansprüche, **dadurch gekennzeichnet, dass** die Führungsmittel (19) durch wenigstens eine insbesondere in der Trasse (14) ausgebildete Führungskulisse gebildet sind, in der am Schubwagen (18) angeordnete Führungsrollen (24) abrollbar sind.

10. Verfahren zur Betätigung einer Entleerklappe (17) an den Förderkörben (15, 16) einer Steilförderanlage (1), um die Entleerklappe (17) zwischen einer Schließstellung und einer Öffnungsstellung zu bewegen, wobei die Steilförderanlage (1) zur Anordnung an einer Böschung (10) eines Tagebau- Abbautrichters ausgebildet ist und wobei mit den Förderkörben (15, 16) Rohstoffe (11) von einer tief gelegenen Beladestation (12), insbesondere aus der Abbausohle des Tagebaus, auf eine hoch gelegene Entladestation (13), insbesondere auf den Erdboden, transportiert werden, wobei das Verfahren wenigstens die folgenden Schritte umfasst:
- Bewegen des Förderkorbes (15, 16) in die hoch gelegene Entladestation (13),
- Anfahren eines Schubwagens (18) gegen die Entleerklappe (17),
- Entriegeln der Entleerklappe (17) durch einen Klappenriegel (21) und
- Bewegen der Entleerklappe (17) durch ein kontrolliertes Verfahren des Schubwagens (18) unter Beibehaltung des Kontaktes zwischen der Entleerklappe (17) und dem Schubwagen (18).

11. Verfahren nach Anspruch 10, **dadurch gekennzeichnet, dass** der Schubwagen (18) über einen Kontaktpunkt mit der Entleerklappe (17) hinaus gegen diese verfahren wird, sodass der die Entleerklappe (17) verschließende Klappenriegel (21) wenigstens teilweise kraftentlastet wird.

12. Verfahren nach Anspruch 10 oder 11, **dadurch gekennzeichnet, dass** der Schubwagen (18) mittels zumindest einem Bewegungsaktuator (20) verfahren wird, wobei der Bewegungsaktuator (20) im Wesentlichen über seinem gesamten Verfahrweg Kontaktkräfte zur Steuerung der Bewegung der Entleerklappe (17) aufnimmt.

## Claims

1. Steep-angle conveying installation (1) for arrangement on a slope (10) of an open-cast mining pit, by means of which steep-angle conveying installation raw materials (11) can be transported from a low-level loading station (12), in particular from the working level of the open-cast mine, to a high-level unloading station (13), in particular at ground level, having a track (14) which is arranged on the slope (10) and on which a first conveying cage (15) and a second conveying cage (16) are movable between the low-level loading station (12) and the high-level unloading station (13), said conveying cages being designed to receive the raw materials (11), wherein the conveying cages (15, 16) have an emptying flap (17) for the emptying of the raw materials (11) out of the conveying cages (15, 16), for which purpose the emptying flap (17) is arranged on the conveying cages (15, 16) so as to be movable between a closed position and an open position, **characterized in that** a thrust carriage (18) is provided which can be moved against the emptying flap (17) from an outer side and by means of which the emptying flap (17) can be moved between the closed position and the open position in a controlled manner.

2. Steep-angle conveying installation (1) according to Claim 1, **characterized in that** guide means (19) are provided in which the thrust carriage (18) is movable in order to be moved against the emptying flap (17).

3. Steep-angle conveying installation (1) according to Claim 2, **characterized in that** the guide means (19) have a guide direction for guiding the thrust carriage movement, which guide direction encloses an angle of less than 45°, preferably less than 30°, particularly preferably less than 20° and most preferably less than 10° with the direction of extent of the emptying flap (17).

4. Steep-angle conveying installation (1) according to Claim 2 or 3, **characterized in that** the guide means (19) are arranged in the track (14), such that the thrust carriage (18) is received in movable fashion on the track (14).

5. Steep-angle conveying installation (1) according to one of the preceding claims, **characterized in that** at least one movement actuator (20) is provided, by means of which a sliding movement can be introduced into the thrust carriage (18).

6. Steep-angle conveying installation (1) according to one of the preceding claims, **characterized in that** the thrust carriage (18) can be moved against the emptying flap (17) beyond a point of contact with said emptying flap.

7. Steep-angle conveying installation (1) according to Claim 6, **characterized in that** the conveying cages (15, 16) have a flap locking means (21) by which the emptying flap (17) can be locked in the closed position, wherein, when the thrust carriage (18) is moved against the emptying flap (17) beyond the point of contact, the flap locking means (21) is relieved of force.

8. Steep-angle conveying installation (1) according to one of the preceding claims, **characterized in that** the thrust carriage (18) has at least one contact roller (22) by which said thrust carriage can be moved against the emptying flap (17), wherein in particular, the emptying flap (17) has at least one raceway (23) against which the contact roller (22) can be moved and on which the contact roller (22) can roll.

9. Steep-angle conveying installation (1) according to one of the preceding claims, **characterized in that** the guide means (19) are formed by at least one guide slot which is formed in particular in the track (14) and in which guide rollers (24) arranged on the thrust carriage (18) can roll.

10. Method for actuating an emptying flap (17) on the conveying cages (15, 16) of a steep-angle conveying installation (1) in order to move the emptying flap (17) between a closed position and an open position, wherein the steep-angle conveying installation (1) is designed for arrangement on a slope (10) of an open-cast mining pit, and wherein, by means of the conveying cages (15, 16), raw materials (11) are transported from a low-level loading station (12), in particular from the working level of the open-cast mine, to a high-level unloading station (13), in particular at ground level, wherein the method comprises at least the following steps:
- moving the conveying cage (15, 16) to the high-level unloading station (13),
- moving a thrust carriage (18) against the emptying flap (17),
- unlocking the emptying flap (17) by way of a flap locking means (21), and
- moving the emptying flap (17) by way of a controlled movement of the thrust carriage (18), while maintaining the contact between the emptying flap (17) and the thrust carriage (18).

11. Method according to Claim 10, **characterized in that** the thrust carriage (18) is moved against the emptying flap (17) beyond a point of contact with the latter, such that the flap locking means (21) which closes the emptying flap (17) is at least partially relieved of force.

12. Method according to Claim 10 or 11, **characterized in that** the thrust carriage (18) is moved by means of at least one movement actuator (20), wherein the movement actuator (20), substantially over its entire movement travel, absorbs contact forces in order to control the movement of the emptying flap (17).

## Revendications

1. Installation de convoyage inclinée (1) à agencer sur un talus (10) d'une exploitation à ciel ouvert, avec laquelle des matières premières (11) peuvent être transportées depuis une station de chargement située en profondeur (12), en particulier d'un niveau d'abattage de l'exploitation à ciel ouvert, à une station de déchargement située en hauteur (13), en particulier au niveau du sol, présentant une ligne (14) agencée sur le talus (10), sur laquelle un premier panier de transport (15) et un second panier de transport (16) sont déplaçables entre la station de chargement située en profondeur (12) et la station de déchargement située en hauteur (13) et sont conçus pour contenir les matières premières (11), dans laquelle les paniers de transport (15, 16) présentent un clapet de vidange (17) pour décharger les matières premières (11) hors des paniers de transport (15, 16), ce pourquoi le clapet de vidange (17) est disposé de façon mobile entre une position de fermeture et une position d'ouverture sur les paniers de transport (15, 16), **caractérisée en ce qu'**il est prévu un chariot de poussée (18), qui peut être amené par un côté extérieur contre le clapet de vidange (17) et par lequel le clapet de vidange (17) est déplaçable de façon contrôlée entre la position de fermeture et la position d'ouverture.

2. Installation de convoyage inclinée (1) selon la revendication 1, **caractérisée en ce qu'**il est prévu des moyens de guidage (19), dans lesquels le chariot de poussée (18) est déplaçable pour se rendre contre le clapet de vidange (17).

3. Installation de convoyage inclinée (1) selon la revendication 2, **caractérisée en ce que** les moyens de guidage (19) présentent une direction de guidage pour le guidage du mouvement du chariot de poussée, qui forme avec la direction d'extension du clapet de vidange (17) un angle inférieur à 45°, de préférence inférieur à 30°, de préférence encore inférieur à 20° et de préférence particulière inférieur à 10°.

4. Installation de convoyage inclinée (1) selon la revendication 2 ou 3, **caractérisée en ce que** les moyens de guidage (19) sont disposés dans la ligne (14), de telle manière que le chariot de poussée (18) soit monté de façon déplaçable sur la ligne (14).

5. Installation de convoyage inclinée (1) selon l'une quelconque des revendications précédentes, **caractérisée en ce qu'**il est prévu au moins un actionneur de mouvement (20), par lequel un mouvement de poussée peut être imprimé au chariot de poussée (18).

6. Installation de convoyage inclinée (1) selon l'une quelconque des revendications précédentes, **caractérisée en ce que** le chariot de poussée (18) peut être déplacé contre le clapet de vidange (17) au-delà d'un point de contact avec celui-ci.

7. Installation de convoyage inclinée (1) selon la revendication 6, **caractérisée en ce que** les paniers de transport (15, 16) présentent un verrou de clapet (21), par lequel le clapet de vidange (17) peut être verrouillé dans la position de fermeture, dans laquelle le verrou de clapet (21) est délesté lors d'une arrivée du chariot de poussée (18) contre le clapet de vidange (17) au-delà du point de contact.

8. Installation de convoyage inclinée (1) selon l'une quelconque des revendications précédentes, **caractérisée en ce que** le chariot de poussée (18) présente au moins un galet de contact (22), avec lequel celui-ci peut être déplacé contre le clapet de vidange (17), en particulier dans lequel le clapet de vidange (17) présente au moins une piste de roulement (23), contre laquelle le galet de contact (22) peut être déplacé et sur laquelle le galet de contact (22) peut rouler.

9. Installation de convoyage inclinée (1) selon l'une quelconque des revendications précédentes, **caractérisée en ce que** les moyens de guidage (19) sont formés par au moins une coulisse de guidage formée en particulier dans la ligne (14), dans laquelle peuvent rouler des galets de guidage (24) disposés sur le chariot de poussée (18).

10. Procédé pour l'actionnement d'un clapet de vidange (17) sur les paniers de transport (15, 16) d'une installation de convoyage inclinée (1), afin de déplacer le clapet de vidange (17) entre une position de fermeture et une position d'ouverture, dans lequel l'installation de convoyage inclinée (1) est réalisée en vue de son agencement sur un talus (10) d'une exploitation à ciel ouvert et dans lequel on transporte avec les paniers de transport (15, 16) des matières premières (11) depuis une station de chargement située en profondeur (12), en particulier depuis le niveau d'abattage de l'exploitation à ciel ouvert, à une station de déchargement située en hauteur (13), en particulier au niveau du sol, dans lequel le procédé comprend au moins les étapes suivantes:
- déplacer les paniers de chargement (15, 16) dans la station de déchargement située en hauteur (13),
- amener un chariot de poussée (18) contre le clapet de vidange (17),
- déverrouiller le clapet de vidange (17) par un verrou de clapet (21), et
- déplacer le clapet de vidange (17) par un déplacement contrôlé du chariot de poussée (18) tout en maintenant le contact entre le clapet de vidange (17) et le chariot de poussée (18).

11. Procédé selon la revendication 10, **caractérisé en ce que** l'on déplace le chariot de poussée (18) contre le clapet de vidange (17) au-delà d'un point de contact avec celui-ci, de telle manière que le verrou de clapet (21) fermant le clapet de vidange (17) soit au moins partiellement délesté.

12. Procédé selon la revendication 10 ou 11, **caractérisé en ce que** l'on déplace le chariot de poussée (18) au moyen d'au moins un actionneur de mouvement (20), dans lequel l'actionneur de mouvement (20) subit essentiellement sur tout son trajet des forces de contact pour la commande du mouvement du clapet de vidange (17).
